# EUROPEAN PATENT SPECIFICATION

(11) **EP 3 368 600 B1**
(45) Date of publication and mention of the grant of the patent: **10.06.2020**
(21) Application number: 16860606.9
(22) Date of filing: 25.10.2016
(51) Int. Cl.: C08K 5/5435, C09D 133/06

(54) **WATER-BASED COATING COMPOSITIONS**
WASSERBASIERTE BESCHICHTUNGSZUSAMMENSETZUNGEN
COMPOSITIONS DE REVÊTEMENT À BASE AQUEUSE

(30) Priority: 30.10.2015 US 201562248630 P
(43) Date of publication of application: 05.09.2018
(73) Proprietor: Sun Chemical Corporation, Parsippany, NJ 07054 (US)
(72) Inventor: ZHA, Yongping, Berkeley Heights, NJ 07922 (US); SCHOTTLAND, Philippe, Sparta, NJ 07871 (US); MATEUSZCZYK, Robert, Hopelawn, NJ 08861 (US); LUCCI, Saverio, Clifton, NJ 07013 (US); SIMONI-TRUNCELLITO, Jeannette, Ridgefield, NJ 07660 (US); GORDON, Vanessa, Montvale, NJ 07645 (US)
(74) Representative: Carpmaels & Ransford LLP
(86) International application number: PCT/US2016/058625
(87) International publication number: WO 2017/074918

(56) References cited:
- EP-A1- 2 599 844
- US-A1- 2002 132 921
- US-A1- 2007 286 959
- US-A1- 2014 001 412
- US-A1- 2015 079 403
- US-B1- 8 343 601

## Description

### FIELD OF THE INVENTION

The subject matter described herein relates to water-based coating compositions that include an aqueous self-crosslinking system comprising an acrylate resin and one or more adhesive-promoting silanes. The coatings are well-suited for application to glass and to other substrate materials. The coatings may be used, for example, to color a substrate such as glass when a coloring agent is included in the coating, and to impart desirable properties to the substrate.

### BACKGROUND OF THE INVENTION

Recycling is a popular way to handle empty glass containers that benefits society at large by reducing the amount of glass in the waste stream. One issue presented by glass recycling is the need to separate different colors of glass from each other so as not to contaminate the glass melt. For example, each color of glass must be melted separately from the other colors of glass. Each color of glass requires separate flow streams from the empty container receiving station through to the melting unit. When different colors of glass have not been previously separated, expensive sorting and separating equipment must be used to do the job.

Glass articles, e.g., containers such as bottles, jars, and the like have maximum strength as soon as they are formed. However, their strength decreases as the containers contact other containers. One way to provide greater resilience, e.g., fracture resistance, is to coat the glass containers. This is helpful for containers that come into contact with and bang into each other during various steps the stream of commerce, such as filling the containers, sealing them, packaging them, and shipping them. A coating may inhibit the formation of stress concentrators that would normally result from the wear and tear of handling.

The glass container industry has largely adopted three standard glass colors: clear, amber, and green. Aside from these colors, there is some blue glass and other color variations. Organic coatings enable the clear glass to be made with any color, which means less process changeovers for glass container manufacturers and only one base color for recyclers.

When a glass melt unit has to change from one color to another, efficiency suffers as processing time increases, and production capability is lost. Also, from the container supplier's perspective, it is disadvantageous to have to carry glass container inventories of different colors.

There is an ongoing need to maintain inventories of various glass raw materials necessary for coloring, as well as to reduce the space needed to maintain the various inventories and the batch material weighing apparatuses. In addition, the added fuel required to melt colored glass in separate batches amounts to a waste of energy. Also, the life of the melting furnace can be shortened by the corrosive action of colored glass batches.

Water-based coatings for glass may that are commercially available are either epoxy-, acrylic-, or polyurethane-based, and are formulated in alkaline polymer dispersions having pH greater than 7. In order to attain desired properties of the coatings, solvents are included in these formulations. In this regard, some coatings contain as much as 30wt% organic solvents, including the undesirable volatile organic compounds (VOCs) that are hazardous to health and the environment. Furthermore, the shelf life of such coatings is relatively short. It is understood that these polymer dispersions cannot be mixed with organosilane adhesion promoters until immediately before use because the shelf life of the composition is only about 24 to about 48 hours after the organosilane component is added.

A description of crosslinking mechanisms can be found in the following reference: "Chemical Reactions of Polymer Crosslinking and Post-Crosslinking at Room and Medium Temperature". Guillaume Tillet, Bernard Boutevin, Bruno Ameduri. Ingenierie & Architectures Macromoleculaires, Institut Charles Gerhardt, UMR 5253, ENSCM 34296 Montpellier Cedex, France.
US 8,343,601 B1 discloses aqueous polyurethene coating compositions containing a polycarbonate-polurethane resin component, an aminoplast resin component and a polyacrylic polyol component.

### SUMMARY OF THE INVENTION

The present description is directed to water-based coatings that include an aqueous self-crosslinking system comprising water, an acrylate resin, and at least one component that crosslinks with the acrylate resin, and at least one adhesion promoting silane selected from an amino-functional silane and an oxysilane selected from a mono-, di-, tri, or tetra-functional oxysilane, and combinations thereof. The water-based coatings may be modified for use as spray coatings, dip coatings, flow coatings, spin coatings, curtain coatings and roll coatings, etc. In one aspect, the coatings that are described are one-pot coatings. The coatings exhibit improved stability, contain no VOCs or very small amounts thereof, are acidic, and that which comes in contact with the coatings can be cleaned with solvent-free cleaners.

When applied as a coating to glass, the coatings provide a continuous film that exhibits significantly improved pencil hardness. In one arrangement, the water-based coatings described herein include a colorant. When applied to glass, the colorant-including coating provides color to the glass, while maintaining transparency through the glass. In another arrangement, the water-based coatings described herein may include a matting agent or opacifying agent. When applied to glass, these agents alter the appearance of the glass.

In a self-crosslinking system, for example, a one-pot self-crosslinking system, all reactive components are present in the system. In other words, all components that are part of crosslinking reaction are present in the self-crosslinking system, and no component needs to be added to commence the crosslinking reaction. For example, in the present description, a suitable aqueous self-crosslinking system includes water, an acrylate resin, and at least one component that crosslinks with the acrylate resin which is an alcohol with multiple -OH groups (e.g., a multi-functional alcohol component) and/or an acid with multiple -COOH groups (e.g., a multi-functional carboxylic acid component). Crosslinking within the system may be initiated by curing, e.g., by applying the coating to a substrate and drying the coating. While curing may occur at or near room temperature, heat may be used to cure the coating as well. While not wishing to be bound by any theory, it may be that the evaporation of water after applying a coating is what brings about the crosslinking. The system has good long-term storage stability, and can be used one month after formulation, and often longer thereafter.

The water-based coating compositions described herein, in addition to the aqueous self-crosslinking system, also includes at least one silane adhesion promoter selected from an amino-functional silane and an oxysilane selected from a mono-, di-, tri, and tetra-functional oxysilane.

The coatings may be also be applied to an inorganic material, e.g., a metal surface, a metal oxide surface, a ceramic, and, as indicated, a glass. The coatings can be used to color glass when coloring agents such as pigments, dyes, etc. are included in the coating compositions.

The following is a non-exhaustive list, intended to be merely exemplary, of what may be coated with the coatings described herein: glass articles, such as containers, windows, mirrors, glass particles, e.g., glass flakes, including but not limited to platy transparent glass or mica particles further comprising one or more inorganic layers such as an oxide layer including titania (TiO₂), silica (SiO₂), iron oxide, or combinations thereof, photonic pigments, ceramics, and metals.

The coatings of the present invention may be prepared in a variety of surface textures, such as smooth textures, rough textures, cross-hatched textures, and others. The coatings, after application to a surface and curing, may provide the coated article with decorative and protective features. For example, a vast range of colors may be selected. Dyes, pigments, etc., exhibiting the selected colors may be included in the coating compositions, allowing the glass or other substrate to take on a wide range of color finishes. Color selection may be made by a customer, glass supplier, and/or manufacturer to provide a desired custom color finish. Industry standard colors may also be added to the coatings. Further, the coatings provide superior chemical and mechanical resistance to the coated substrates.

The coating compositions exhibit improved stability, low pH and contain zero-to-low VOCs, which allows for the use of pure water to replace the organic cleanings solvent currently used. Unlike two-pot epoxy or polyacrylics/polyurethane systems, the dissolution and thermal curing of self-crosslinking acrylates in water requires no organic co-solvent. Thus, VOCs, if any, derive from trace amounts arising from the production of the raw materials of the composition. As a result, water can be used for cleaning that which comes in contact with the coating compositions. This further reduces the impact on the environment.

The coatings also preferably provide good chemical and mechanical resistance. In a preferred embodiment, the coatings of the present invention impart improved water immersion resistance and dishwashing resistance. The coatings of the present invention also exhibit significantly improved pencil hardness.

One of the advantages that a coating composition as described herein offers to those in the glass industry is that glass products can be produced clear and colorless, with color being added as needed by application of the present coatings to meet current demand. Further, from the perspective of the recycling industry, the need to sort based on color is greatly reduced, if not eliminated. The coating compositions can be burned off the glass before the glass reaches its melting temperature. Thus, recyclers would only have clear glass to process, as opposed to working with glass of two or more colors that would have to be sorted.

Glass particles and micas may be coated with the coatings described herein. Such coated particles may be more robust than that which is currently available, in which the colorants are adsorbed onto the surface (e.g. laked colorants). With the present coating compositions, a broader color palette may be realized and the coated particles are not likely to bleed color. Coated particles of the present description may find use in graphic arts and the coating compositions may find use in architectural, industrial, plastic or automotive coatings, and possibly cosmetic applications as well.

The water-based coatings described herein may be acidic (e.g., a pH less than 7), in contrast to the state of the art formulations. In one embodiment, the present water-based coatings have a pH of 1 to 6. In another embodiment, present water-based coatings have a pH of 2 to 5. In another embodiment, present water-based coatings have a pH of 3 to 4. The acidity of the present water-based coatings may be sufficient to make the inclusion of antimicrobials (to prevent bacterial or fungal growth) unnecessary, although antimicrobials may still be optionally included. Also, the inclusion of volatile amines for purposes of controlling pH may be not be needed in the present water-based coatings, which may improve viscosity, stability, reduce odor, and result m a favorable impact on the environment. Further, since organosilanes are more stable m acidic solutions than basic solutions, the viscosity stability of the present water-based coatings is further improved.

### DETAILED DESCRIPTION

It is to be understood that the foregoing summary description and the following detailed description are exemplary and explanatory only, and are not restrictive of any subject matter claimed.

Unless otherwise defined, all technical and scientific terms used herein have the same meaning as is commonly understood by one of skill in the art concerning the subject matter described herein.

### DEFINITIONS

As used herein, the use of the singular includes the plural unless specifically stated otherwise. For example, the singular forms "a," "an" and "the" are intended to include the plural forms, unless the context clearly indicates otherwise.

As used herein, the use of "or" means "and/or" unless stated otherwise.

As used herein, the terms "comprises" and/or "comprising" specify the presence of the stated features, integers, steps, operations, elements, and/or components, but do not preclude the presence or addition of one or more other features, integers, steps, operations, elements, components, and/or groups thereof. Furthermore, to the extent that the terms "includes," "having," "has," "with," "composed," "comprised" or variants thereof are used in either the description or the claims, such terms are intended to be inclusive in a manner similar to the term "comprising."

As used herein, the terms "(meth)acrylate" or "(meth)acrylic acid" include both acrylate and methacrylate compounds, and both acrylic acid and methacrylic acid.

As used herein, "monofunctional" means having one functional group.

As used herein, "multi-functional" means having two or more functional groups. A multi-functional compound, for example a multi-functional monomer, can for example be difunctional, tri-functional, tetra-functional or an even greater number of functional groups. Two or more functional groups are, unless expressly indicated, independent of each other and, for example, can be the same or different.

As used herein, the terms "monomer" or "monomers" is intended to embrace monomers, oligomers, and mixtures thereof.

As used herein, the terms "polymer" and "polymers" includes copolymers unless indicated otherwise.

As used herein, the terms "inks and coatings," "inks," "compositions" and "fluids" are used interchangeably.

Throughout this disclosure, all parts and percentages are by weight (wt% or mass% based on the total weight) and all temperatures are in °C unless otherwise indicated.

The coatings of the present disclosure provide, upon coating, high-performance, environmentally-safe vehicles for delivering a component or property to the substrate. For example the coatings can be used to color or protect glass, such as glass containers and glass particles, through the delivery of a colorant or a protectant to the glass that is included in the coating. Glass is but one example of a substrate that may be coated with the presently described coatings. Other materials may also be coated (e.g., ceramics, metals, metal oxides, etc.).

In a preferred arrangement, the water-based coatings of the present description are stable as one-pot systems. For example, all components of the water-based coatings may remain in a fluid, aqueous state, usable state for at least a week, more preferably, for at least one month from the time the compositions are formulated, e.g., the components are mixed together. The water-based coatings include the aqueous self-crosslinking system, e.g., an acrylate resin, such as a poly(acrylate) resin, water, and at least one component that crosslinks with the acrylate resin. Such components include multi-functional materials such as multi-functional alcohols and multi-functional carboxylic acids. The aqueous water-based system may include one or more multi-functional alcohols and one or more multi-functional carboxylic acids. The water-based coatings also include at least one silane, e.g., at least one oxysilane, as an adhesion promoter.

After applying the coating to a substrate, such as a glass article, the coating will begin to dry, as water evaporates therefrom. The drying may commence the crosslinking reaction. Drying may be result from exposure to air, and in other instances, heat may be applied to cause drying.

An exemplary aqueous self-crosslinking system includes a water component, an acrylate resin component, and one or more components that cross link with the acrylate resin component. The acrylate resin component may be, for example, a poly(acrylate) resin. The one or more components that crosslink with the acrylate resin component are selected from a multi-functional alcohol, a multi-functional carboxylic acid, and combinations thereof. The multi-functional carboxylic acid may be, for example, a poly(carboxylic acid). In one embodiment, the aqueous self-crosslinking system includes a water component, an acrylate resin component, a multi-functional alcohol, and a multi-functional carboxylic acid.

The water-based coating compositions described herein include one or more silane adhesion promoters to provide balance between reactivity/adhesion to substrates and stability of the overall coating composition. Silanes that are suited for use as adhesion promoters include amino functional alkoxysilanes and alkoxysilanes that have one, two, three, or four alkoxy groups.

Silanes that are suited for use as adhesion promoters include amino functional alkoxysilanes and alkoxysilanes that have one, two, three or four alkoxy groups.

The water-based coatings described herein can be cured after being applied to a substrate. In one arrangement, curing is effected by the addition of heat. Heat curing promotes a thermal crosslinking reaction involving the acrylate resin and the crosslinking component, e.g., the multi-functional carboxylic acid, the multi-functional alcohol, and/or both. In one arrangement, the thermal crosslinking reaction produces a thermoset film. With the aforementioned crosslinking components, the only by-product of crosslinking may be water.

The water-based coatings may also include a water-dilutable acid-catalyzed silica sol-gel compositions and/or additional crosslinkers, for improving water immersion resistance and dishwashing resistance. The color composition and the texture of the compositions can be attained by adding different pigment dispersions, dyes, matting/opacifying agents, or combinations thereof. It has been demonstrated that with changes in coating compositions, the surface may be altered from gloss finish, to matte, to frost.

A number of commercially available aqueous self-crosslinking systems that include acrylate resins are suited for use in the present water-based coatings. By way of example, those systems include, but are not limited to: ACRODUR® 950 L, ACRODUR® DS 3530, ACRODUR® DS 3515, ACRODUR® DS 3558, RHOPLEX® HA-8, RHOPLEX® HA-12, RHOPLEX® ECO-100 and RHOPLEX® ECO-3482. The ACRODUR® systems are available from BASF. The RHOPLEX® systems are available from Dow Chemical. These aqueous systems preferably contain acrylate resins, multi-functional carboxylic acids, and multi-functional alcohols in 50wt% solids content. The systems crosslink at a temperature no more than 300°C, more preferably no more than 250°C, and most preferably no more than 200°C. For example, the systems crosslink at temperatures in the range of 50°C to 300°C; more preferably, in a range of 100°C to 250°C; and even more preferably, in a range of 150°C to 200°C.

The aqueous self-crosslinking systems are acidic, preferably having pH is in the range of 1 to 6. More preferably, the pH is in a range of 2 to 5, and most preferably 3 to 4. The viscosity of aqueous self-crosslinking systems (at an 50wt% solids content) is preferably 50 to 5000 cP, more preferably 500 to 3500 cP and most preferably 1000 to 2500 cP, as determined with Brookfield DV-2T, LV-63 spindle, 15, 30 or 60 RPM.

In addition to what is described herein, other aqueous self-crosslinking systems that include acrylates may also be employed in the present water-based coating. Also, two or more systems may be used in combination in the water-based coating.

The water-based coating may also include acrylic polymers and/or styrene-acrylic polymers that are not self-crosslinking. Examples of same include but are not limited to: ACRONAL® N 285 (BASF), JONCRYL® 1540 (BASF), ENCOR® 163S (Arkema), ENCOR® 169S (Arkema), in order to modify the chemical and physical properties of the coatings. Non self-crosslinking polymers may lower the cross-linking density and reduce hardness, yielding a more flexible coating with less chemical resistance. Combinations of these polymers may also be used.

The aqueous self-crosslinking systems may contain one or more acrylate monomers, including but not limited to alkyl, aryl, alkaryl (meth)acrylates, esters of acrylic and methacrylic acid with alcohols which contain at least one further hetero atom in addition to the oxygen atom in the alcohol group and/or which contain an aliphatic or aromatic ring, and the like, such as methyl methacrylate, methyl acrylate, n-butyl acrylate, ethyl acrylate and 2-ethylhexyl acrylate, 2-ethoxyethyl acrylate, 2-butoxyethyl (meth)acrylate, dimethylaminoethyl (meth)acrylate, diethylaminoethyl (meth)acrylate, (meth)acrylates, cyclohexyl (meth)acrylate, phenylethyl (meth)acrylate or phenylpropyl (meth)acrylate, hydroxyethyl (meth)acrylate, poly(ethylene glycol) methacrylate, and N,N-dimethylaminoethyl methacrylate, and acrylates of heterocyclic alcohols, such as furfuryl (meth)acrylate. The self-crosslinking acrylates can also contain other monomers having olefinic double bond(s) capable of undergoing free radical polymerization, including but not limited to vinyl esters, vinylaromatic compounds, nitriles, vinyl halides, hydrocarbons, and the like, such as vinyl laurate, vinyl stearate, vinyl propionate, vinyl acetate, vinyltoluene, α- and p-styrene, α-butylstyrene, 4-n-butylstyrene, 4-n-decylstyrene, styrene, chlorine-, fluorine- or bromine-substituted ethylenically unsaturated compounds, vinyl chloride, vinylidene chloride, butadiene, isoprene and chloroprene.

The amino-functional silane present as an adhesion promoter in the water-based compositions may be at least one of an amino-functional silane and a mono-, di-, tri- or tetra-functional alkoxysilane. The aminosilane and the mono-, di-, tri- or tetra-functional alkoxysilane are to be compatible with the self-crosslinking acrylate, and should form a coating composition that, upon curing, produces a coating with the properties discussed herein.

The amino functional silanes may have one or more oxysilane groups and may be represented by the formula (I):

R¹ₓSi(OR²)₄₋ₓ (I)

x is an integer of 1, 2 or 3; each R¹ is independently H, a C₁ to C₁₀ alkylamino group, a C₁ to C₁₀ functionalized alkylamino group, a C₁ to C₁₀ alkyleneamino group, a C₁ to C₁₀ arylamino group, or a C₁ to C₁₀ alkyl etheramino group, wherein not all R¹ is H; each R² is independently H, a C₁ to C₅ alkyl group, a C₁ to C₅ acetyl group, or a -Si(OR³)_{3-y}R⁴_{y} group where y is an integer of 0, 1, 2, or 3; each R³ is independently H, a C₁ to C₅ alkyl group, a C₁ to C₅ acetyl group, or another
-Si(OR³)_{3-y}R⁴_{y} group; each R⁴ is independently H, a C₁ to C₁₀ alkyl group, a C₁ to C₁₀ functionalized alkyl group, a C₁ to C₁₀ alkylene group, an aryl group, a C₁ to C₁₀ alkyl ether group, a C₁ to C₁₀ alkylamino group, a C₁ to C₁₀ functionalized alkylamino group, a C₁ to C₁₀ alkyleneamino group, an arylamino group, or a C₁ to C₁₀ alkyl etheramino group, and combinations thereof.

Examples of such amino functional silanes are 3-aminopropyltrimethoxysilane, 3-aminopropyltriethoxysilane, 3-aminopropyldiisopropylethoxysilane, 3-aminopropyldimethylethoxysilane, 3-aminopropylmethyldiethoxysilane, (p, m)-aminophenyltrimethoxysilane, 3-aminopropyltris(methoxyethoxyethoxy)silane, 3-aminopropylsilanetriol, 3-(3-aminophenoxy)propyltrimethoxysilane, 4-aminobutyltriethoxysilane, N-(6-aminohexyl)aminopropyltrimethoxysilane, N-(6-aminohexyl)aminomethyltriethoxysilane, 3-(2-aminoethylamino)propyltrimethoxysilane, (aminoethylaminomethyl)phenethyltrimethoxysilane, and combinations of same.

The water-based coating may include at least one mono-, di-, tri-, or tetra-functional oxysilane as an adhesion promoting agent. The mono-, di-, tri-, or tetra-functional oxysilanes may be represented by formula (II):

R⁵ₓSi(OR⁶)₄₋ₓ (II)

Where x is an integer of 0, 1, 2 or 3; each R⁵ is independently H, a C₁ to C₂₀ alkyl group, a C₁ to C₂₀ functionalized alkyl group, a C₁ to C₂₀ alkylene group, a C₁ to C₂₀ aryl group, or a C₁ to C₂₀ alkyl ether group; each R⁶ is independently H, a C₁ to C₂₀ alkyl group, a C₁ to C₂₀ alkyl ether, a C₁ to C₂₀ acetyl group, a -Si(OR⁷)_{3-y}R⁸_{y} group; or collectively, OR⁶ forms a carboxylate group; y is an integer of 0, 1, 2, or 3, each R⁷ is independently H, a C₁ to C₂₀ alkyl group, a C₁ to C₂₀ acetyl group, or another Si(OR⁷)_{3-y}R⁸_{y} group; each R⁸ is independently H, a C₁ to C₂₀ alkyl group, a C₁ to C₂₀ functionalized alkyl group, a C₁ to C₂₀ alkylene group, an aryl group, or a C₁ to C₂₀ alkyl ether group, and combinations thereof.

Where the adhesion promoting silane is at least one mono-, di-, or tri-functional oxysilane, it may be represented by formula (III):

R⁹ₓSi(OR¹⁰)₄₋ₓ (III)

Where x is an integer of 1, 2 or 3; each R⁹ is independently H, a C₁ to C₂₀ alkyl group, a C₁ to C₂₀ functionalized alkyl group, a C₁ to C₂₀ alkylene group, an aryl group, or a C₁ to C₂₀ alkyl ether group; each R¹⁰ is independently H, a C₁ to C₂₀ alkyl group, a C₁ to C₂₀ acetyl group, or a -Si(OR¹¹)_{3-y}R¹²_{y} group; y is an integer of 0, 1, 2, or 3; each R¹¹ is independently H, a C₁ to C₂₀ alkyl group a C₁ to C₂₀ acetyl group, or another -Si(OR¹¹)_{3-y}R¹²_{y} group; each R¹² is independently H, a C₁ to C₂₀ alkyl group, a C₁ to C₂₀ functionalized alkyl group, a C₁ to C₂₀ alkylene group, an aryl group, or a C₁ to C₂₀ alkyl ether, and combinations thereof.

Examples of such mono-, di- or tri-functional silanes are ethoxytrimethylsilane, methoxytrimethylsilane, methyltrimethoxysilane, methyltriethoxysilane, dimethyldimethoxysilane, dimethyldiethoxysilane, propyltrimethoxysilane, isobutyltrimethoxysilane, n-octyltriethoxysilane, phenyltrimethoxysilane, phenyltriethoxysilane, ethyltrimethoxysilane, diphenyldiethoxysilane, vinyltrimethoxysilane, vinyltriacetoxysilane, trimethoxysilyl propyl methacrylate.

Where the adhesion promoting silane is at least one tetra-functional oxysilane, it may be represented by formula (IV):

Si(OR¹³)₄ (IV)

Where each R¹³ is independently H, a C₁ to C₂₀ alkyl group, a C₁ to C₂₀ alkyl ether group, a-Si(OR¹⁴)₃ group, or collectively, OR¹³ forms a carboxylate group; where each R¹⁴ is independently H, a C₁ to C₂₀ alkyl group, a C₁ to C₂₀ alkyl ether group, another -Si(OR¹⁴)₃ group, or collectively, OR¹⁴ forms a carboxylate group; and combinations thereof.

Examples of tetra-functional silanes are tetramethyl orthosilicate, tetraethyl orthosilicate, tetrapropyl orthosilicate, tetraisopropyl orthosilicate, tetrabutyl orthosilicate, tetraisobutyl orthosilicate, tetrakis(methoxyethoxy)silane, tetrakis(methoxypropoxy)silane, tetrakis(ethoxyethoxy)silane, tetrakis(methoxyethoxyethoxy)silane, trimethoxyethoxysilane, dimethoxydiethoxysilane, triethoxymethoxysilane, poly(dimethoxysiloxane), poly(diethoxysiloxane), poly(dimethoxydiethoxysiloxane), tetrakis(trimethoxysiloxy)silane, tetrakis(triethoxysiloxy)silane, and the like. Examples of tetrafunctional silanes with carboxylate functionalities are silicon tetraacetate, silicon tetrapropionate and silicon tetrabutyrate.

The water-based coating compositions may optionally include a water-dilutable acid-catalyzed silica sol-gel composition. The silica sol-gel composition may be any silica sol-gel composition that is compatible with the acrylate of the aqueous self-crosslinking system and the silane adhesion promoters, and which provides a coating composition which, upon curing, produces a glass coating with the properties described herein. The aqueous acid-catalyzed silica sol-gel composition may have a solids content of 1wt% to 50wt%, more preferably 10wt% to 50wt%, even more preferably 20wt% to 40wt%.

The water-dilutable acid-catalyzed silica sol-gels may have a pH of 2 to 6, and more preferably 3 to 5. Such sol-gels are available as commercial products. Examples thereof include but are not limited to LUDOX® HSA (GRACE), LUDOX® CL-P (GRACE) and DYNASYLAN® SIVO 110 (Evonik). Alkalinically- and neutrally-stabilized silica sol-gel compositions may also be used.

Various additives can also be combined with the sol-gel composition to adjust the pH or further improve the chemical and water resistance. Examples of alkaline neutralization agent, hydro- and oleophobic additives include, but not limited to, Dynasylan SIVO 111 and SIVO 113. Furthermore, silica sols used in the composition may contain not only amorphous, aqueous SiO₂ particles but also other sol-gel-forming materials such as oxides, e.g., aluminum oxide, silicon/aluminum oxide, titanium oxide, zirconium oxides, zinc oxide or combinations thereof. In addition to silica-based sol gels, the sol-gel composition may optionally include organofunctional silanes, such as 3-glycidyloxypropyltrimethoxysilane, 3-glycidyloxypropyltriethoxysilane, 3-glycidyloxypropylmethyldimethoxysilane, 3-glycidyloxypropylmethyldiethoxysilane and mixtures thereof.

Optionally, additional crosslinking agents, e.g., in addition to the multi-functional alcohol and/or the multi-functional carboxylic acid, may be included in the water-based coatings. The inclusion of additional crosslinking agents may improve the performance of the water-based coatings. The additional crosslinking agents react with the functional groups of the multi-functional alcohol, the functional groups of the multi-functional carboxylic acid, and/or the functional groups of the acrylic resin. Examples of suitable additional crosslinkers and commercially available products include, but are not limited to: carbodiimides (e.g., CARBODILITE® SV-02, Nisshinbo Chemical), aziridines (e.g., CX-100®, DSM), epoxides (e.g., TGIC®, Sigma-Aldrich), protected urethanes (e.g., API-BI795®, Advanced Polymer, Inc.) and melamine's (e.g., Cymel® 303 LF, Allnex®), e.g., urethanes in which the urethane is protected by a blocking group, and is activated upon heating. Combinations of same may be included in the composition.

In order to color to a substrate, the water-based coating composition may include one or more colorants. Suitable colorants include but are not limited to organic or inorganic pigments (in various forms, not limited to dry pigment, but may be used as press-cakes or dispersions) and dyes. The dyes include but are not limited to azo dyes, anthraquinone dyes, xanthene dyes, azine dyes, etc., and combinations thereof. Organic pigments may be one pigment or a combination of pigments, such as for instance Pigment Yellow Numbers 12, 13, 14, 17, 74, 83, 114, 126, 127, 174, 188; Pigment Red Numbers 2, 22, 23, 48:1, 48:2, 52, 52:1, 53, 57:1, 112, 122, 166, 170, 184, 202, 266, 269; Pigment Orange Numbers 5, 16, 34, 36; Pigment Blue Numbers 15, 15:3, 15:4; Pigment Violet Numbers 3, 23, 27; and/or Pigment Green Number 7. Inorganic pigments may include but are not limited to: non-limiting pigments such as iron oxides, titanium dioxides, chromium oxides, ferric ammonium ferrocyanides, ferric oxide blacks, Pigment Black Number 7 and/or Pigment White Numbers 6 and 7. Other organic and inorganic pigments and dyes may be employed. Different kinds of colorants may be mixed in combination to attain the desired colors.

Suitable natural colorants include but are not limited to organic or inorganic pigments and dyes. The natural dyes include but are not limited to henna, madder, spurulina, combinations thereof and the like. Natural organic pigments include but are not limited to cochineal red, chlorophyllin green, carotene yellow, turmeric yellow, anthocyanin blue, etc., and combinations thereof. Natural inorganic pigments include but are not limited to ultramarine blue, vegetable carbon black, combinations thereof and the like. Other natural organic and inorganic pigments and dyes can also be employed, as well as combinations that attain the desired colors.

In one embodiment, the colorants employed in the present invention may be any FD&C or D&C pigment. Preferred FD&C pigments include FD&C Red No. 40, FD&C Yellow No. 5, FD&C Yellow No. 6 and FD&C Blue No. 1, FD&C Blue #1 Aluminum Lake, FD&C Blue #2, FD&C Blue #2 Aluminum Lake on alumina, FD&C Green #3, FD&C Red #3, FD&C Red #40 and its Aluminum Lake, FD&C Yellow #5, FD&C Yellow #5 Aluminum Lake, FD&C Yellow #6, FD&C Lakes, Citrus Red #2, etc. Preferred D&C pigments include D&C Red No. 6, D&C Red No. 7, D&C Red No. 21, D&C Red No. 22, D&C Red No. 27, Red No. 28, D&C Red No. 30, D&C Red No. 33, D&C Red No. 34, D&C Red No. 36, D&C Orange No. 5 and D&C Yellow No. 10.

In one embodiment, the colorant may be in the form of a colorant dispersion that is resin free (e.g., free of water-based acrylics or styrene acrylics). In another embodiment, the colorant dispersion is resin-free, surfactant based, and/or free of alkyl phenyl ethoxylate (APEO), which is environmentally friendly.

The water-based coating composition may include one or more matting/opacifying agents. Suitable matting/opacifying agents include but are not limited to organic or inorganic particles. The organic particles include but are not limited to ROPAQUE® ULTRA Opaque Polymer (Dow), ROPAQUE® OP-96 All Purpose Pigment (Dow), Deuteron® MK (Deuteron GmbH), Deuteron® MK-F (Deuteron GmbH), Deuteron® PMH C (Deuteron GmbH), Deuteron® MM 684 (Deuteron GmbH), SOOFINE® JJ Powder® (J Color Chemicals), SOOFINE® JMV Microsphere (J Color Chemicals), SOOFINE® MV Micron-Beads (J Color Chemicals), combinations thereof and the like. The inorganic particles include but are not limited to ACEMATT® 82 (Evonik), ACEMATT® HK 440 (Evonik), ACEMATT® OK 412 (Evonik), ACEMATT® 3600 (Evonik), Mistron® Monomix G (Imerys), Jetfine® 1H (Imerys), Syloid® 161 (Grace), Syloid® 308 (Grace), etc., and combinations thereof. Other organic and inorganic particles can also be employed, as well as combinations that achieve the surface effect desired.

The aqueous self-crosslinking system may comprise 5wt% to 90wt%, preferably 10wt% to 80wt%, and more preferably 15wt% to 60wt%, and even more preferably 20wt% to 50wt% of the water-based coatings. The amino functional alkoxysilanes may comprise 0.5wt% to 5wt%, preferably 1wt% to 4wt%, and more preferably 2wt% to 3wt% of the water-based coatings. The mono-, di-, tri-, and tetra-functional alkoxysilanes may comprise 0.1wt% to 3wt%, preferably 0.5wt% to 2.5wt%, and more preferably 1wt% to 2wt% of the water-based coatings.

Regarding optional inclusions, colorants, if present, may be included in the water-based coatings amounts of 0.5 to 50wt%, preferably 1wt% to 40wt%, and more preferably 5wt% to 30wt%, and may be in the form of pigment dispersions or matting/opacifying agents. Water-dilutable acid-catalyzed silica sol-gel compositions, if included, may be present in the water-based coatings in amounts of 0.1wt% to 20wt%, preferably 1wt% to 15wt%, and more preferably 2wt% to 10wt%. Additional crosslinkers, if present, may be included in the water-based coatings in amounts of 0.1wt% to 15wt%, preferably 0.5wt% to 10wt%, and more preferably 1wt% to 5wt%. Solvents such as organic solvents, if included, may be present in the water-based coatings in amounts of 0.1wt% to 15wt%, preferably 0.5wt% to 10wt%, more preferably 1wt% to 5wt%. All values are based on the total formulation weight. In the case of clear, non-colored glass, colorants are not needed.

Other optional additives can be in the water-based coating composition, such as defoamers, wetting agents, leveling agents, dispersants, surfactants, plasticizers, antimicrobials, photocatalysts, ultraviolet absorbers, antioxidants and combinations thereof. The amount of inclusion(s) may be between 0.05wt% to 5wt%, based on the weight of the total formulation of the water-based coatings.

The present water-based coatings can be prepared by a number of processes, resulting in stable coating compositions with long shelf life. Upon application and curing of the present water-based coatings, a coated substrate, e.g., a coated glass substrate, is produced that has desirable properties. For example, an aqueous self-crosslinking system and adhesion-promoting silane(s) can be added to a pigment dispersion in sequence and mixed for a period of time, resulting in a pigment-including water-based coating that has improved stability. When applied to glass and then cured, such coating compositions color the glass while being substantially transparent, and meet all chemical and physical requirements for glass coatings.

The water-based coating compositions may contain, at most, 15wt% VOCs. However, as indicated, the amount of VOCs in the compositions may be far less than that. For example, the compositions may contain, at most, 10wt% VOCs, more preferably, at most 5wt% VOCs, and most preferably of all, the coatings may be essentially free of VOCs (e.g., VOCs present in trace amounts. VOCs can be environmentally harmful and present a health hazard.

The water-based coating compositions may contain a plasticizer, e.g., a phosphate plasticizer material.

The compositions of the present disclosure can be applied by conventional methods, such as spray coating, dip coating, flow coating, spin coating, curtain coating, roll coating, etc. to form a continuous surface film. The coatings may be cured by exposure to heat, preferably at temperature in the range of 50°C to 300°C, more preferably 100 to 250°C, and most preferably 150 to 200°C for a time of 5 minutes to 12 hours. The coating thickness can be varied by means of the application technique. Coatings having a thickness of 0.5 to 20 µm, and more desirably of 1 to 10 µm, are generally utilized.

### EXAMPLES

The following examples illustrate specific aspects of the present water-based coating compositions.

For example, in the examples that follow, a substrate is spray-coated with the water-based coating compositions, yet it is possible to apply the water-based coatings by other methods. The person of ordinary skill in the art would be able to adjust the water-based coating compositions for viscosity, rheology, etc., to adapt them (if necessary) for application by another method, such as dip coating, flow coating, spin coating, curtain coating and roll coating.

### Examples 1 - 3: Transparent Color Coatings

Three (3) water-based coating compositions that include colorants are described in Table 1. When applied to a glass substrate, the coatings are transparent.

In Example 1, the water-based coating composition includes an aqueous self crosslinking system that is commercially available under the trade name ACRODUR® 950L, a polymer solution available from BASF. 56wt% ACRODUR® 950 L, having 50wt% solids content, was mixed with 44wt% deionized water. The polymer solution in the amount indicated in the table was gradually added to a color base (SUNSPERSE® Red 122) with continuous mixing, followed by adding the silane adhesion promoter and the other mentioned additives. Deionized water was added after the components were included to adjust the viscosity.

The water-based coating compositions of Examples 2 and 3 include an aqueous water-based self crosslinking system that is commercially available under the trade name ACRODUR® DS 3515 from BASF. This system includes a polymer dispersion. 65wt% ACRODUR® DS 3515, having 50wt% solids content was mixed with 35wt% deionized water. Defoamer and wetting agent were sequentially added to the polymer dispersion (in the amounts of polymer dispersion indicated in the table), followed by, if any, the water-dilutable acid-catalyzed silica sol-gel, hydrophobizing additive, additional crosslinking components and plasticizer. The pigment dispersions (SUNSPERSE® Blue 15:0 and SUNSPERSE® Red 122, respectively) and silane adhesion promoters were added toward the end of the formulation process.

As shown in Table 1, the inclusion of a silica sol-gel and an additional crosslinking component (Example 2) improved water immersion resistance and dishwashing resistance.

All amounts listed in the tables that follow are in wt%.

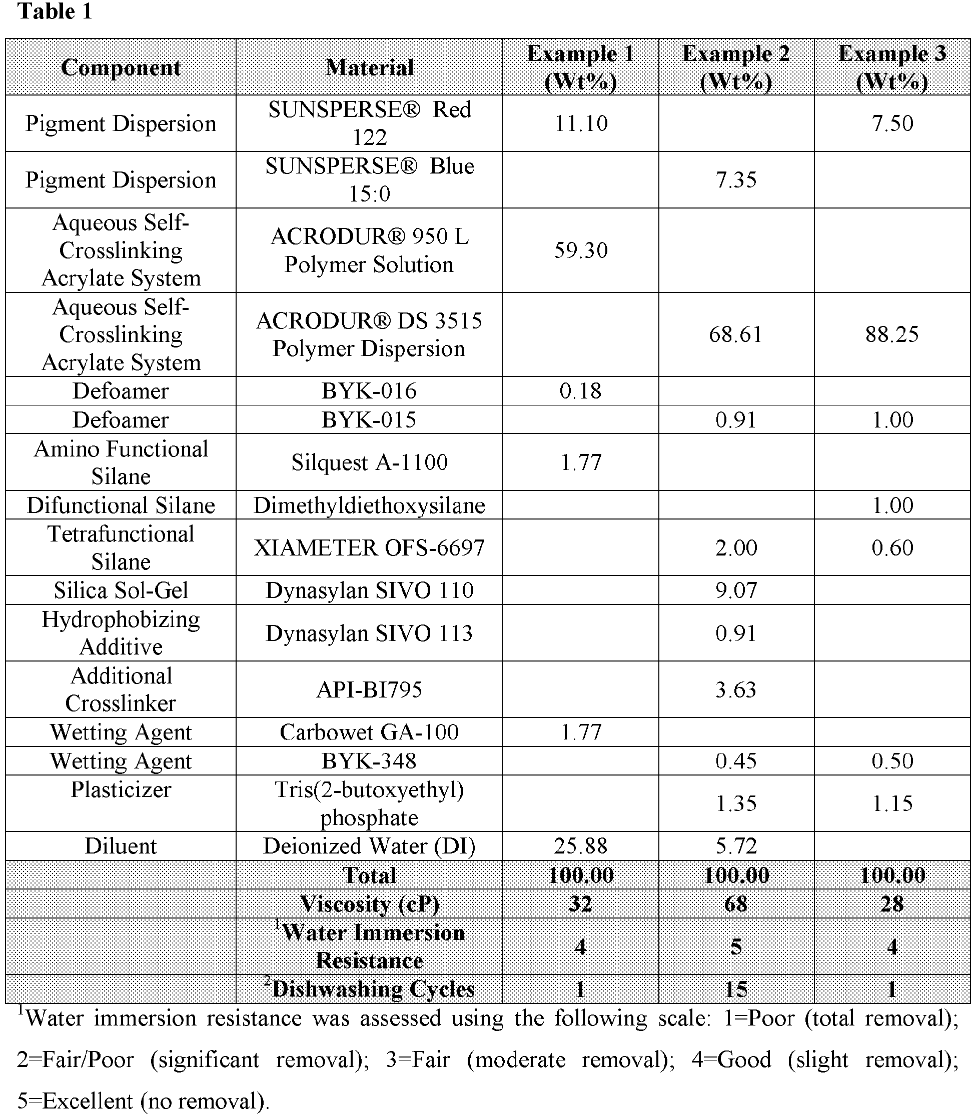

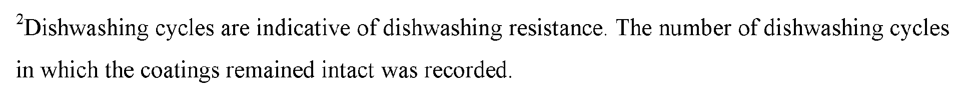

### Examples 4 and 5: Opaque White Coating

Examples 4 and 5 are opaque white water-based coating compositions, with the components thereof being identified in Table 2. The composition of Example 4 includes an aqueous self-crosslinking system including an acrylate that is a polymer solution including 71wt% ACRODUR® 950 L (50wt% solids) and 29wt% deionized water. ACRODUR® 950 L and JONCRYL® 1540, commercially available from BASF, a hydroxyl functional acrylic emulsion which does not participate in crosslinking, were added together and mixed. A titanium dioxide slurry (KRONOS® 4311) was gradually added into the mixture of ACRODUR® 950 L and JONCRYL® 1540 polymer dispersions, followed by adding the amino-functional oxysilane and the tetra-functional oxysilane adhesion promoters and the additives that are mentioned. Deionized water was added at the end to adjust the viscosity. The final mixture was milled with a 50 mL Eiger mini mill (EMI Engineered Mills, Inc.) at 5000 RPM for 5 min in the presence of 80 vol% 0.8 µm YTZ® Grinding Media (Tosoh Corporation).

The water-based coating composition of Example 5 includes dry titania (TiO₂) pigment rather than the pre-dispersed slurry included in the Example 4 composition. The dispersing agent was added to the aqueous self-crosslinking acrylate system in polymer solution (80wt% ACRODUR® 950 L, 20wt% deionized water) with continuous mixing. The defoamer was then added. Dry TiO₂ pigment (TiONA 595) was added gradually with continuous mixing, which continued until the pigment was fully dispersed. The other mentioned additives and the amino-functional oxysilane and the tetra-functional oxysilane adhesion promoters were added and mixing continued. Deionized water was added at the end to adjust the viscosity. The water-based coating composition of Example 5 was not milled.

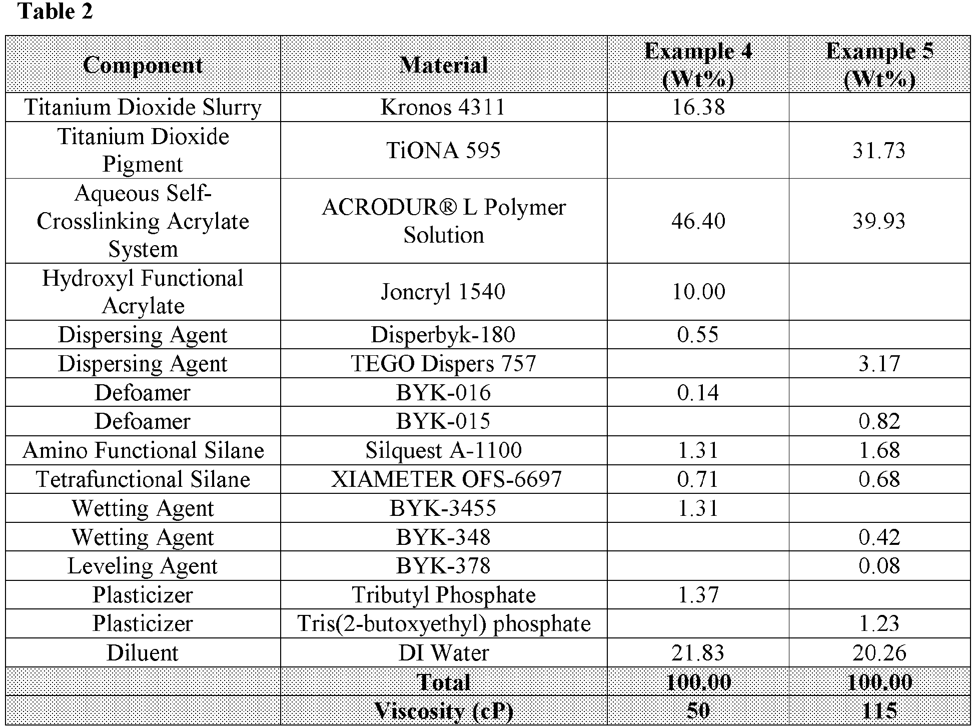

The water-based coating of Example 5 was successfully applied to three different substrates (glass, ceramic and iron metal) and cured, as described below. The substrates were coated by spray coating with a hand applicator. The spray conditions were:
Applicator: A central pneumatic 4 oz. adjustable detail air spray gun.
Application Pressure: 207 kPa (30 psi).
Container Rotation: 250 - 270 RPM.
Spray Distance: 10 - 15 cm (4-6 inches).
Spray Cycle: 4 - 8 sec.

After spray coating the substrates, the coatings were heat cured at 175°C for 30 minutes. The coated substrates were allowed to cool to room temperature, prior to testing. This coating procedure was followed for all Examples and Comparative Examples.

As shown in Table 3, in relation to the water-based coating of Example 5, all three coated substrates exhibited similar results, despite the differences in the substrates.

**Table 3**

| | **Glass** | **Ceramic** | **Iron Metal** |
|---|---|---|---|
| ¹Acetone Rub Resistance | 5 | 5 | 5 |
| ¹Cologne Rub Resistance | 5 | 5 | 5 |
| ¹Bottle Rub Resistance | 5 | 5 | 5 |
| ¹Cross-hatch Tape Adhesion | 5 | 5 | 5 |
| Pencil Hardness | 8H | 8H | 8H |

¹Acetone rub resistance, cologne rub resistance, bottle rub resistance, and cross-hatch tape adhesion were assessed using the following scale: 1=Poor (total removal); 2=Fair/Poor (significant removal); 3=Fair (moderate removal); 4=Good (slight removal); 5=Excellent (no removal).

### Example 6: Water-Based Frost Coating Composition

A water-based coating composition including matting agents whose inclusion provides a frost coating is demonstrated in Table 4. The aqueous self-crosslinking acrylate system is a polymer dispersion including 65wt% ACRODUR® DS 3515 (50wt% solids) and 35wt% deionized water, used in the amount set forth in Table 4 (e.g., 68.89wt%). The matting agents were gradually added into the polymer dispersion while mixing, followed by a tetra-functional oxysilane adhesion promoter and the other mentioned additives. Deionized water was added at the end to adjust the viscosity.

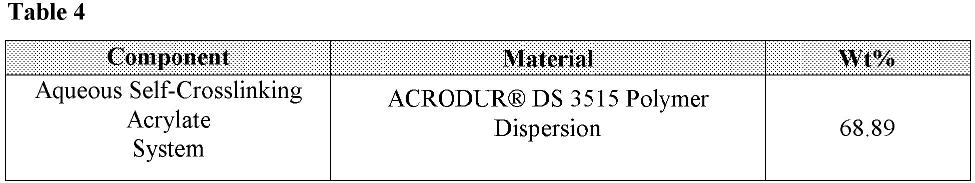

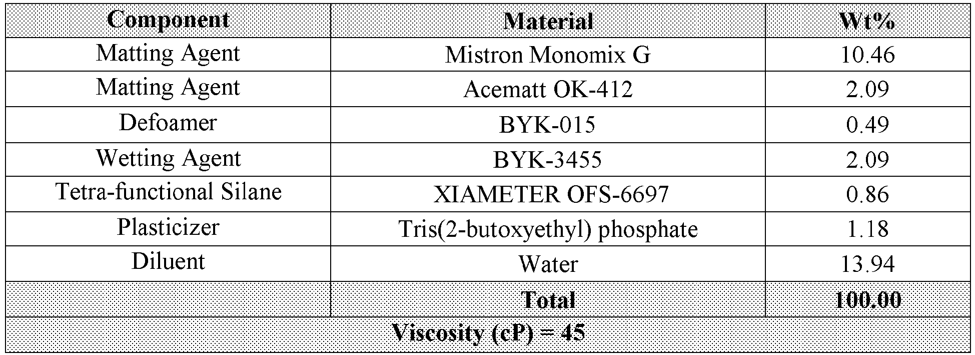

### Comparative Example 1: A Comparative Coating Composition

A commercial spray coating composition includes three parts: (1) an epoxidized-alkyd resin in an aqueous medium containing about 30wt% organic solvents (Pinturas Benicarlo Barniz Brillante Base Agua); (2) a pigment dispersion to give desired color, here it is a pigment dispersion including SUNSPERSE® Red 122; and (3) an epoxy functional silane (3-glycidoxypropyltrimethoxysilane) as an adhesion promoter. Deionized water is added as a diluent.

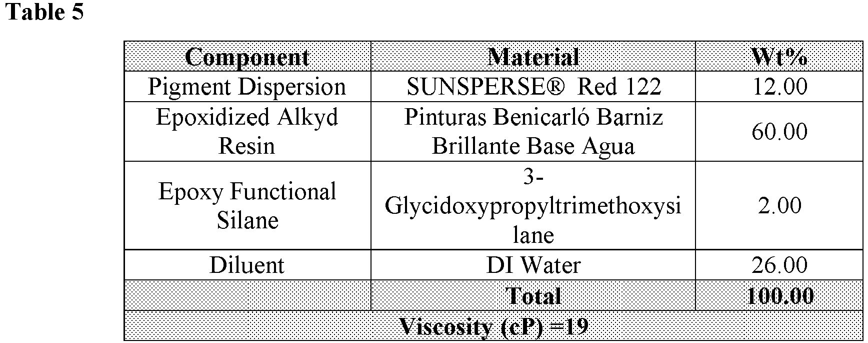

The pot lives of Example 1 and Comparative Example 1 were investigated. The pot life for the coating of Comparative Example 1 was determined to be only 1 to 2 days, while the pot life for the coating of Example 1 was determined to be at least 1 month. Table 6 shows the viscosity of the water-based coating compositions of Example 1 and Comparative Example 1 over time. After mixing, the viscosity of Comparative Example 1 coating composition almost doubled in 24 hours. After 48 hours, the viscosity of this composition is so high that it is unusable for application by spray coating. By contrast, the viscosity of the Example 1 water-based coating composition remained stable and suitable for spraying even after 1 month. As a result, the inventive coatings are able to be made in 1 part, while Comparative Example 1 is a 3-part system that cannot be mixed together until immediately before use, and even then, will only remain useable as a spray coating for approximately 24 - 48 hours before the viscosity rapidly increases and the composition becomes unusable.

The water-based coatings described herein remain in a fluid and usable state for a period of one month or more, as determined from the time when the water-based compositions are formulated, e.g., the components of the compositions are mixed together. A composition exhibiting a viscosity of about 200 cP or less would be expected to be in a fluid and usable state.

**Table 6**

| **Viscosity (cP) after mixing** | **Example 1** | **Comparative Example 1** |
|---|---|---|
| 1 hour | 32 | 19 |
| 1 day | 32 | 38 |
| 2 days | 32 | 1484* |
| 1 week | 38 | Gelled |
| 1 month | 45 | Gelled |

| | | |
|---|---|---|
| *Measured by Brookfield DV-2T viscometer with LV-63 spindle at 30 RPM at room temperature. | | |

### Comparative Example 2: Another Comparative Coating Composition

In contrast to the one-component, self-crosslinking acrylate resin used in the water-based coating compositions of Examples 1-6, a hydroxyl-functional polyacrylic (Bayhydrol A XP 2770, Bayer Material Science) and a blocked aliphatic polyisocyanate (Imprafix 2794 XP, Bayer Material Science) was used to formulate a transparent red coating that is the subject of Comparative Example 2 (Table 7).

**Table 7**

| **Component** | **Material** | **Wt%** |
|---|---|---|
| Pigment Dispersion | SUNSPERSE® Red 122 | 26.47 |
| Hydroxyl Functional Polyacrylics | Bayhydrol A XP 2770 | 31.65 |
| Blocked Aliphatic Polyisocyanate | Imprafix 2794 XP | 25.09 |
| Wetting Agent | BYK-333 | 0.25 |
| Co-solvent | Dipropylene glycol | 1.22 |
| Thiocarboxylate Functional Silane | Silquest A-Link 599 | 0.14 |
| Amino Functional Silane | Dynasylan AMEO | 0.14 |
| Diluent | DI Water | 15.04 |
| | **Total** | **100.00** |

A comparison between the properties of the water-based coating compositions of Examples 1-6 and the coating compositions of Comparative Examples 1 and 2 is shown in Table 8. The transparency of the water-based coating compositions of Examples 1-3 is superior to the transparency of the coating compositions of Comparative Examples 1 and 2. The properties of the water-based coating compositions of Examples 1-6 exceed or equal the properties of Comparative Examples 1 and 2. Notably, the pencil hardness the water-based coating compositions of Examples 1-6 exceeds the pencil hardness of Comparative Examples 1 and 2. The superior pencil hardness is indicative of greater scratch resistance.

**Table 8**

| **Example** | **1** | **2** | **3** | **4** | **5** | **6** | **CE* 1** | **CE* 2** |
|---|---|---|---|---|---|---|---|---|
| Transparency¹ | 5 | 5 | 5 | N/A | N/A | N/A | 5 | 3 |
| ²Acetone Rub Resistance | 5 | 5 | 5 | 5 | 5 | 5 | 5 | 3 |
| ²Cologne Rub Resistance | 5 | 5 | 5 | 5 | 5 | 5 | 5 | 5 |
| ²Bottle Rub Resistance | 5 | 5 | 5 | 5 | 5 | 5 | 5 | 5 |
| ²Cross-hatch Tape Adhesion | 5 | 5 | 5 | 5 | 5 | 5 | 5 | 5 |
| Pencil Hardness | 8H | 8H | 5H | 6H | 8H | 8H | 4H | 2H |

| | | | | | | | | |
|---|---|---|---|---|---|---|---|---|
| *CE = Comparative Example ¹Transparency was assessed on a 1-5 basis with 1 being very hazy and 5 being clear. For colors except for white, black and frost, a clearer coating is more desirable by the glass decoration industry. Examples 4 and 5 are white, and Example 6 is frost. Thus, their transparency was not reported in the table. ²Acetone rub resistance, cologne rub resistance, bottle rub resistance, and cross-hatch tape adhesion were assessed using the following scale: 1=Poor (total removal); 2=Fair/Poor (significant removal); 3=Fair (moderate removal); 4=Good (slight removal); 5=Excellent (no removal). | | | | | | | | |

### Test Methods

Unless stated otherwise, viscosity was measured by Brookfield DV-2T viscometer with LV-61 spindle at 60 RPM at room temperature.

Transparency was assessed by visual inspection.

Acetone rub resistance was tested by rubbing the coating with an acetone-soaked cotton ball back and forth 100 times. The color transferred to the cotton ball qualitatively indicated the removal amount of the coating during the test.

Cologne rub resistance was tested by rubbing the coating with a cologne-soaked cotton ball back and forth 100 times. Brut cologne for men was used in the tests. The color transferred to the cotton ball qualitatively indicated the removal amount of the coating during the test.

Bottle rub resistance was tested by rubbing the surfaces of two coated containers together, one container in each hand. This test was repeated several times at various locations on the containers. Instances of scratching or sliding resistance were recorded.

Cross-hatch tape adhesion was tested using a BYK-Gardner 5126 Cross-Cut Tester. First, a lattice pattern of 1 mm cutting space was made on the coating (cutting to the glass substrate). Then, 3M 616 tape was placed on the coating covering the cut pattern, and pulled back slowly on itself at about 180° angle. The amount of coating removed from the substrate to the tape was rated.

Pencil hardness was tested by BYK-Gardner PH-9500 Pencil Hardness Tester. Pencils of different hardness were moved with a fixed pressure and a fixed angle over the coating. The hardness of the pencil that scratches through the coating was recorded.

Water resistance was tested by immersing the coating in 0 °C and 25 °C water bath for 48 hours, respectively, followed by cross-hatch tape adhesion test. The amount of coating removed from the substrate to the tape was rated.

Dishwashing resistance was tested following standard BS EN 12875-1:2005 procedures wherever possible. Because of equipment limitations, however, some minor modifications were required. The dishwasher used in the test was Kenmore 14659 18" Portable Dishwasher, selecting normal wash cycle using the high temperature option. Each wash cycle included two washes at approximately 140 °F (60 °C) and 4 rinses. The total time for each wash cycle was about 95 min. After each wash cycle, the coatings were inspected for defects, anomalies, and other changes in the coating. The number of dishwashing cycles in which the coatings remained intact was recorded.

The water-based coating compositions that are the subject of this disclosure have been described above in detail. It will be appreciated that those skilled in the art, upon consideration of the present disclosure, may make modifications and/or improvements on this invention that fall within the scope of the appended claims.

## Claims

1. A water-based coating comprising:
an aqueous self-crosslinking system comprising water, an acrylate resin, and at least one component that crosslinks with the acrylate resin, wherein the at least one component that crosslinks with the acrylate resin is selected from at least one multi-functional alcohol, at least one multi-functional carboxylic acid, and combinations thereof;
and at least one adhesion promoting silane selected from an amino-functional silane and an oxysilane selected from a mono-, di-, tri-, or tetra-functional oxysilane, and combinations thereof.

2. The water-based coating of claim 1, wherein the at least one adhesion promoting silane comprises:
(i) an amino-functional oxysilane, preferably an amino-functional oxysilane represented by formula (I)
R¹ₓSi(OR²)₄₋ₓ (I)
x is an integer of 1, 2 or 3; each R¹ is independently H, a C₁ to C₁₀ alkylamino group, a C₁ to C₁₀ functionalized alkylamino group, a C₁ to C₁₀ alkyleneamino group, a C₁ to C₁₀ arylamino group, or a C₁ to C₁₀ alkyl etheramino group, wherein not all R¹ is H; each R² is independently H, a C₁ to C₅ alkyl group, a C₁ to C₅ acetyl group, or a-Si(OR³)_{3-y}R⁴_{y} group where y is an integer of 0, 1, 2, or 3; each R³ is independently H, a C₁ to C₅ alkyl group, a C₁ to C₅ acetyl group, or another - Si(OR³)_{3-y}R⁴_{y} group; each R⁴ is independently H, a C₁ to C₁₀ alkyl group, a C₁ to C₁₀ functionalized alkyl group, a C₁ to C₁₀ alkylene group, an aryl group, a C₁ to C₁₀ alkyl ether group, a C₁ to C₁₀ alkylamino group, a C₁ to C₁₀ functionalized alkylamino group, a C₁ to C₁₀ alkyleneamino group, an arylamino group, or a C₁ to C₁₀ alkyl etheramino group, and combinations thereof, e.g. an amino-functional oxysilane selected from 3-aminopropyltrimethoxysilane, 3-aminopropyltriethoxysilane, 3 aminopropyldiisopropylethoxysilane, 3-aminopropyldimethylethoxysilane, 3-aminopropylmethyldiethoxysilane, (p, m)-aminophenyltrimethoxysilane, 3-aminopropyltris(methoxyethoxyethoxy)silane, 3-aminopropylsilanetriol, 3-(3-aminophenoxy)propyltrimethoxysilane, 4-amino butyltriethoxysilane, N-(6-aminohexyl)aminopropyltrimethoxysilane, N-(6-aminohexyl)aminomethyltriethoxysilane, 3-(2-aminoethylamino)propyltrimethoxysilane, (aminoethylaminomethyl)phenethyltrimethoxysilane, and combinations thereof;
(ii) an oxysilane selected from a mono- di-, tri- or tetra-functional oxysilane, preferably a mono-, di-, tri, or tetra-functional oxysilane represented by formula (II):
R⁵ₓSi(OR⁶)₄₋ₓ (II)
x is an integer of 0, 1, 2 or 3; each R⁵ is independently H, a C₁ to C₂₀ alkyl group, a C₁ to C₂₀ functionalized alkyl group, a C₁ to C₂₀ alkylene group, a C₁ to C₂₀ aryl group, or a C₁ to C₂₀ alkyl ether group; each R⁶ is independently H, a C₁ to C₂₀ alkyl group , a C₁ to C₂₀ alkyl ether group, a C₁ to C₂₀ acetyl group, a - Si(OR⁷)_{3-y}R⁸_{y} group or collectively, OR⁶ forms a carboxylate group; y is an integer of 0, 1, 2, or 3; each R⁷ is independently H, a C₁ to C₂₀ alkyl group, a C₁ to C₂₀ acetyl group, or another Si(OR⁷)_{3-y}R⁸_{y} group; each R⁸ is independently H, a C₁ to C₂₀ alkyl group, a C₁ to C₂₀ functionalized alkyl group, a C₁ to C₂₀ alkylene group, an aryl group, or a C₁ to C₂₀ alkyl ether group, and combinations thereof, e.g. a mono-, di- or tri-functional silane selected from ethoxytrimethylsilane, methoxytrimethylsilane, methyltrimethoxysilane, methyltriethoxysilane, dimethyldimethoxysilane, dimethyldiethoxysilane, propyltrimethoxysilane, isobutyltrimethoxysilane, n-octyltriethoxysilane, phenyltrimethoxysilane, phenyltriethoxysilane, ethyltrimethoxysilane, diphenyldiethoxysilane, vinyltrimethoxysilane, vinyltriacetoxysilane, trimethoxysilyl propyl methacrylate, and combinations thereof;
(iii) a tetra-functional oxysilane selected from tetramethyl orthosilicate, tetraethyl orthosilicate, tetrapropyl orthosilicate, tetraisopropyl orthosilicate, tetrabutyl orthosilicate, tetraisobutyl orthosilicate, tetrakis(methoxyethoxy)silane, tetrakis(methoxypropoxy)silane, tetrakis(ethoxyethoxy)silane, tetrakis(methoxyethoxyethoxy)silane, trimethoxyethoxysilane, dimethoxydiethoxysilane, triethoxymethoxysilane, poly(dimethoxysiloxane), poly( diethoxysiloxane), poly(dimethoxydiethoxysiloxane), tetrakis(trimethoxysiloxy)silane, tetrakis(triethoxysiloxy)silane, silicon tetraacetate, silicon tetrapropionate, silicon tetrabutyrate and combinations thereof; or
(iv) a combination of at least one amino-functional silane and at least one oxysilane selected from a mono- di-, tri- or tetra-functional oxysilane.

3. The water-based coating of claim 1, wherein the acrylate resin is a poly(acrylate) resin.

4. The water-based coating of claim 1, wherein the aqueous self-crosslinking system is a one-pot system.

5. The water-based coating of claim 1, wherein the self-crosslinking acrylate crosslinks at a temperature in the range of 50°C to 300°C, preferably 100°C to 250°C, e.g. 150°C to 200°C.

6. The water-based coating of claim 1, wherein the acrylate resin derives from:
(i) one or more acrylate monomers selected from alkyl, aryl, alkaryl (meth)acrylates, esters of acrylic and methacrylic acid with alcohols which contain at least one further hetero atom in addition to the oxygen atom in the alcohol group and/or which contain an aliphatic or aromatic ring;
(ii) one or more acrylate monomers selected from methyl methacrylate, methyl acrylate, n-butyl acrylate, ethyl acrylate and 2-ethylhexyl acrylate, 2-ethoxyethyl acrylate, 2-butoxyethyl (meth)acrylate, dimethylaminoethyl (meth)acrylate, diethylaminoethyl (meth)acrylate, cyclohexyl (meth)acrylate, phenylethyl (meth)acrylate, phenylpropyl (meth)acrylate, furfuryl (meth)acrylate, hydroxyethyl (meth)acrylate, poly(ethylene glycol) methacrylate, and N,N-dimethylaminoethyl methacrylate; or
(iii) an acrylate monomer and one or more monomers having one or more olefinic double bonds polymerizable by free radical polymerization, preferably an acrylate monomer and one or more monomers having one or more olefinic double bonds polymerizable by free radical polymerization selected from vinyl esters, vinyl aromatic compounds, nitriles, vinyl halides, and hydrocarbons.

7. The water-based coating of claim 1, further comprising:
(i) a silica sol-gel composition, e.g. an acid catalyzed silica sol-gel composition having a solids content of >1wt% to 50wt%, preferably 10wt% to 50wt%, more preferably 20wt% to 40wt%; or
(ii) at least one colorant, preferably at least one colorant selected from a pigment or a dye, e.g. at least one dye selected from azo dyes, anthraquinone dyes, xanthene dyes, azine dyes, and combinations thereof, or at least one organic pigment selected from Pigment Yellow Numbers 12, 13, 14, 17, 74, 83, 114, 126, 127, 174, 188; Pigment Red Numbers 2, 22, 23, 48:1, 48:2, 52, 52: 1, 53, 57: 1, 112, 122, 166, 170, 184,202,266,269; Pigment Orange Numbers 5, 16, 34, 36; Pigment Blue Numbers 15, 15:3, 15:4; Pigment Violet Numbers 3, 23, 27; and Pigment Green Number 7, or at least one inorganic pigment selected from iron oxides, titanium dioxides, chromium oxides, ferric ammonium ferrocyanides, ferric oxide blacks, Pigment Black Number 7, Pigment White Number 6 and Pigment White Number 7.

8. The water-based coating of claim 1, wherein the aqueous self-crosslinking system further comprises a further crosslinking component selected from a carbodiimide, an aziridine, an epoxide, a protected urethane, a melamine, and combinations thereof.

9. The water-based coating of claim 1, wherein the aqueous self-crosslinking system is present in an amount of 5wt% to 90wt%, preferably 10wt% to 80wt%, more preferably 15wt% to 60wt%, e.g. 20wt% to 50wt%.

10. The water-based coating of claim 1, wherein the amino-functional silane is present in an amount of 0.5wt% to 5wt%, preferably 1.0wt% to 4wt%, e.g. 2wt% to 3wt%.

11. The water-based coating of claim 1, wherein the oxysilane is present in an amount of 0.1wt% to 3wt%, preferably 0.5wt% to 2.5wt%, e.g. 1wt% to 2wt%.

12. The water-based coating of claim 1, further comprising one or more of:
(i) one or more colorants present in an amount of 0.5wt% to 50wt%;
(ii) a silica sol-gel composition present in an amount of 0.1wt% to 20wt%;
(iii) an additional crosslinking component present in an amount of 0.1wt% to 15wt%; or
(iv) an organic solvent present in an amount of 0.1wt% to 15wt%, preferably 0wt% to 2wt%, e.g. 0wt% to 1wt%.

13. The water-based coating of claim 1, wherein the aqueous self-crosslinking system has a pH <7, preferably a pH of 1 to 6, and/or wherein the viscosity of the aqueous self-crosslinking system at 50wt% aqueous solution is 50 to 5000 cP, as measured by Brookfield DV-2T viscometer with LV-61 spindle at 60 RPM at room temperature.

14. The water-based coating of claim 1, further comprising one or more additives selected from defoamers, wetting agents, leveling agents, dispersants, surfactants, plasticizers, antimicrobials, photocatalysts, ultraviolet absorbers, and antioxidants, preferably further comprising a phosphate-based plasticizer.

15. The water-based coating of claim 1, wherein the composition remains in a fluid, usable state for at least one week after formulation of the composition, preferably for at least one month after formulation of the composition.

16. A coated substrate comprising a substrate coated with the water-based coating of any one of claims 1 to 15.

17. The coated substrate of claim 16, wherein the substrate is selected from
(i) glass, a metal, and a ceramic, preferably wherein the substrate further comprises an inorganic oxide selected from titania, silica, iron oxide and combinations thereof; or
(ii) glass, platy transparent glass, and mica particles, preferably wherein the coating is applied to the substrate by a coating method selected from spray coating, dip coating, flow coating, spin coating, curtain coating and roll coating.

18. A colored coated substrate comprising a glass substrate coated with the water-based coating of claim 1, wherein the water-based coating further comprises a colorant, preferably wherein the water-based coating further comprises a silica-sol gel composition.

19. A coated substrate comprising a glass substrate coated with the water-based coating of claim 1, wherein the water-based coating further comprises a matting agent or an opacifying agent, preferably wherein the water-based coating further comprises a silica-sol gel composition.

20. The coated substrate of claim 16 or 19, or colored coated substrate of claim 18, wherein the substrate is a glass container.

21. The coated substrate of claim 16, wherein the coated substrate has a pencil hardness of ≥6H, and/or wherein the coated substrate has a rub resistance of ≥4 to one or more of cologne, acetone, and bottle.

## Patentansprüche

1. Wasserbasierte Beschichtung, die Folgendes umfasst:
ein wässriges selbstvernetzendes System, das Wasser, ein Acrylatharz und mindestens einen Bestandteil umfasst, welcher eine Vernetzung mit dem Acrylatharz eingeht, wobei der mindestens eine Bestandteil, welcher eine Vernetzung mit dem Acrylatharz eingeht, aus mindestens einem multifunktionellen Alkohol, mindestens einer multifunktionellen Carbonsäure und deren Kombinationen ausgewählt ist;
und mindestens ein haftvermittelndes Silan, das aus einem aminofunktionellen Silan und einem Oxysilan, welches aus einem mono-, di-, tri- oder tetrafunktionellen Oxysilan ausgewählt ist, und deren Kombinationen ausgewählt ist.

2. Wasserbasierte Beschichtung nach Anspruch 1, wobei das mindestens eine haftvermittelnde Silan Folgendes umfasst:
(i) ein aminofunktionelles Oxysilan, vorzugsweise ein aminofunktionelles Oxysilan, das der Formel (I) entspricht
R¹ₓSi(OR²)₄₋ₓ (I)
x ist eine ganze Zahl aus 1, 2 oder 3, jedes R¹ steht auf unabhängige Weise für H, eine C₁- bis C₁₀-Alkylaminogruppe, eine funktionalisierte C₁- bis C₁₀-Alkylaminogruppe, eine C₁- bis C₁₀-Alkylenaminogruppe, eine C₁- bis C₁₀-Arylaminogruppe oder eine C₁- bis C₁₀-Alkyletheraminogruppe, wobei nicht sämtliche R¹ für H stehen; jedes R² steht auf unabhängige Weise für H, eine C₁- bis C₅-Alkylgruppe, eine C₁- bis C₅-Acetylgruppe oder eine -Si(OR³)_{3-y}R⁴_{y}-Gruppe, wobei y eine ganze Zahl aus 0, 1, 2 oder 3 ist; jedes R³ steht auf unabhängige Weise für H, eine C₁- bis C₅-Alkylgruppe, eine C₁- bis C₅-Acetylgruppe oder eine andere -Si(OR³)_{3-y}R⁴_{y}-Gruppe; jedes R⁴ steht auf unabhängige Weise für H, eine C₁-bis C₁₀-Alkylgruppe, eine funktionalisierte C₁- bis C₁₀-Alkylgruppe, eine C₁- bis C₁₀-Alkylengruppe, eine Arylgruppe, eine C₁- bis C₁₀-Alkylethergruppe, eine C₁- bis C₁₀-Alkylaminogruppe, eine funktionalisierte C₁- bis C₁₀-Alkylaminogruppe, eine C₁- bis C₁₀-Alkylenaminogruppe, eine Arylaminogruppe oder eine C₁- bis C₁₀-Alkyletheraminogruppe und deren Kombinationen, z.B. für ein aminofunktionelles Oxysilan, das aus 3-Aminopropyltrimethoxysilan, 3-Aminopropyltriethoxysilan, 3-Aminopropyldiisopropylethoxysilan, 3-Aminopropyldimethylethoxysilan, 3-Aminopropylmethyldiethoxysilan, (p,m)-Aminophenyltrimethoxysilan, 3-Aminopropyltris(methoxyethoxyethoxy)silan, 3-Aminopropylsilantriol, 3-(3-Aminophenoxy)propyltrimethoxysilan, 4-Aminobutyltriethoxysilan, N-(6-Aminohexyl)aminopropyltrimethoxysilan, N-(6-Aminohexyl)aminomethyltriethoxysilan, 3-(2-Aminoethylamino)propyltrimethoxysilan, (Aminoethylaminomethyl)phenethyltrimethoxysilan und deren Kombinationen ausgewählt ist;
(ii) ein Oxysilan, das aus einem mono-, di-, tri- oder tetrafunktionellen Oxysilan ausgewählt ist, vorzugsweise einem mono-, di-, tri- oder tetrafunktionellen Oxysilan, welches der Formel (II) entspricht:
R⁵ₓSi(OR⁶)₄₋ₓ (II)
x ist eine ganze Zahl aus 0, 1, 2 oder 3; jedes R⁵ steht auf unabhängige Weise für H, eine C₁- bis C₂₀-Alkylgruppe, eine funktionalisierte C₁- bis C₂₀-Alkylgruppe, eine C₁- bis C₂₀-Alkylengruppe, eine C₁-bis C₂₀-Arylgruppe oder eine C₁- bis C₂₀-Alkylethergruppe; jedes R⁶ steht auf unabhängige Weise für H, eine C₁- bis C₂₀-Alkylgruppe, eine C₁-bis C₂₀-Alkylethergruppe, eine C₁- bis C₂₀-Acetylgruppe, eine -Si(OR⁷)_{3-y}R⁸_{y}-Gruppe, oder OR⁶ bildet zusammengenommen eine Carboxylatgruppe; y ist eine ganze Zahl aus 0, 1, 2 oder 3; jedes R⁷ steht auf unabhängige Weise für H, eine C₁- bis C₂₀-Alkylgruppe, eine C₁- bis C₂₀-Acetylgruppe, oder eine andere -Si(OR⁷)_{3-y}R⁸_{y}-Gruppe; jedes R⁸ steht auf unabhängige Weise für H, eine C₁- bis C₂₀-Alkylgruppe, eine funktionalisierte C₁- bis C₂₀-Alkylgruppe, eine C₁- bis C₂₀-Alkylengruppe, eine Arylgruppe oder eine C₁- bis C₂₀-Alkylethergruppe sowie deren Kombinationen, z. B. für ein mono-, di- oder trifunktionelles Silan, das aus Ethoxytrimethylsilan, Methoxytrimethylsilan, Methyltrimethoxysilan, Methyltriethoxysilan, Dimethyldimethoxysilan, Dimethyldiethoxysilan, Propyltrimethoxysilan, Isobutyltrimethoxysilan, n-Octyltriethoxysilan, Phenyltrimethoxysilan, Phenyltriethoxysilan, Ethyltrimethoxysilan, Diphenyldiethoxysilan, Vinyltrimethoxysilan, Vinyltriacetoxysilan, Trimethoxysilylpropylmethacrylat und deren Kombinationen ausgewählt ist;
(iii) ein tetrafunktionelles Oxysilan, das aus Tetramethylorthosilicat, Tetraethylorthosilicat, Tetrapropylorthosilicat, Tetraisopropylorthosilicat, Tetrabutylorthosilicat, Tetraisobutylorthosilicat, tetrakis-(Methoxyethoxy)silan, tetrakis-(Methoxypropoxy)silan, tetrakis-(Ethoxyethoxy)silan, tetrakis-(Methoxyethoxyethoxy)silan, Trimethoxyethoxysilan, Dimethoxydiethoxysilan, Triethoxymethoxysilan, Poly(dimethoxysiloxan), Poly(diethoxysiloxan), Poly(dimethoxydiethoxysiloxan), tetrakis-(Trimethoxysiloxy)silan, tetrakis-(Triethoxysiloxy)silan, Siliciumtetraacetat, Siliciumtetrapropionat, Siliciumtetrabutyrat und deren Kombinationen ausgewählt ist; oder
(iv) eine Kombination aus mindestens einem aminofunktionellen Silan und mindestens einem Oxysilan, welches aus einem mono-, di-, tri- oder tetrafunktionellen Oxysilan ausgewählt ist.

3. Wasserbasierte Beschichtung nach Anspruch 1, wobei es sich bei dem Acrylatharz um ein Poly(acrylat)harz handelt.

4. Wasserbasierte Beschichtung nach Anspruch 1, wobei es sich bei dem wässrigen selbstvernetzenden System um ein Eintopfsystem handelt.

5. Wasserbasierte Beschichtung nach Anspruch 1, wobei das selbstvernetzende Acrylat bei einer Temperatur im Bereich von 50 °C bis 300 °C eine Vernetzung erfährt, vorzugsweise bei 100 °C bis 250 °C, z.B. bei 150 °C bis 200 °C.

6. Wasserbasierte Beschichtung nach Anspruch 1, wobei das Acrylatharz sich aus Folgendem ableitet:
(i) einem oder mehreren Acrylatmonomeren, die aus Alkyl- Aryl-, Alkaryl(meth)acrylaten, Estern der Acryl- und Methacrylsäure mit Alkoholen, welche zusätzlich zu dem Sauerstoffatom in der Alkoholgruppe mindestens ein weiteres Heteroatom enthalten und/oder welche einen aliphatischen oder aromatischen Ring enthalten, ausgewählt sind;
(ii) einem oder mehreren Acrylatmonomeren, die aus Methylmethacrylat, Methylacrylat, n-Butylacrylat, Ethylacrylat und 2-Ethylhexylacrylat, 2-Ethoxyethylacrylat, 2-Butoxyethyl(meth)acrylat, Dimethylaminoethyl(meth)acrylat, Diethylaminoethyl(meth)acrylat, Cyclohexyl(meth)acrylat, Phenylethyl(meth)acrylat, Phenylpropyl(meth)acrylat, Furfuryl(meth)acrylat, Hydroxyethyl(meth)acrylat, Poly(ethylenglykol)methacrylat und N,N-Dimethylaminoethylmethacrylat ausgewählt sind; oder
(iii) einem Acrylatmonomer sowie einem oder mehreren Monomeren, die eine oder mehrere ethylenische Doppelbindungen aufweisen und mittels freier radikalischer Polymerisation polymerisierbar sind, vorzugsweise einem Acrylatmonomer und einem oder mehreren Monomeren, die eine oder mehrere ethylenische Doppelbindungen aufweisen und mittels freier radikalischer Polymerisation polymerisierbar sind, wobei sie aus Vinylestern, vinylaromatischen Verbindungen, Nitrilen, Vinylhalogeniden und Kohlenwasserstoffen ausgewählt sind.

7. Wasserbasierte Beschichtung nach Anspruch 1, wobei sie weiterhin Folgendes umfasst:
(i) eine Siliciumdioxid-Sol-Gel-Zusammensetzung, z.B. eine säurekatalysierte Siliciumdioxid-Sol-Gel-Zusammensetzung mit einem Feststoffgehalt von > 1 Gew.-% bis 50 Gew.-%, vorzugsweise 10 Gew.-% bis 50 Gew.-%, insbesondere 20 Gew.-% bis 40 Gew.-%; oder
(ii) mindestens ein färbendes Mittel, vorzugsweise mindestens ein färbendes Mittel, das aus einem Pigment oder einem Farbstoff ausgewählt ist, z.B. mindestens einen Farbstoff, der aus den Azofarbstoffen, den Anthrachinon-Farbstoffen, den Xanthen-Farbstoffen, den Azin-Farbstoffen und deren Kombinationen ausgewählt ist, oder mindestens ein organisches Pigment, das aus den Gelbpigmenten mit den Nummern 12, 13, 14, 17, 74, 83, 114, 126, 127, 174, 188; den Rotpigmenten mit den Nummern 2, 22, 23, 48:1, 48:2, 52, 52:1, 53, 57:1, 112, 122, 166, 170, 184, 202, 266, 269; den Orangepigmenten mit den Nummern 5, 16, 34, 36; den Blaupigmenten mit den Nummern 15, 15:3, 15:4; den Violettpigmenten mit den Nummern 3, 23, 27; und dem Grünpigment Nummer 7 ausgewählt ist, oder mindestens ein anorganisches Pigment, das aus den Eisenoxiden, den Titandioxiden, den Chromoxiden, den Eisen(III)ammoniumferrocyaniden, den Eisen(III)oxid-Schwarzpigmenten, dem Schwarzpigment Nummer 7, den Weißpigment Nummer 6 und dem Weißpigment Nummer 7 ausgewählt ist.

8. Wasserbasierte Beschichtung nach Anspruch 1, wobei das wässrige selbstvernetzende System ferner einen weiteren vernetzenden Bestandteil umfasst, der aus einem Carbodiimid, einem Aziridin, einem Epoxid, einem geschützten Urethan, einem Melamin und deren Kombinationen ausgewählt ist.

9. Wasserbasierte Beschichtung nach Anspruch 1, wobei das wässrige selbstvernetzende System in einer Menge von 5 Gew.-% bis 90 Gew.-%, vorzugsweise 10 Gew.-% bis 80 Gew.-%, insbesondere 15 Gew.-% bis 60 Gew.-%, z.B. 20 Gew.-% bis 50 Gew.-%, vorliegt.

10. Wasserbasierte Beschichtung nach Anspruch 1, wobei das aminofunktionelle Silan in einer Menge von 0,5 Gew.-% bis 5 Gew.-%, vorzugsweise 1,0 Gew.-% bis 4 Gew.-%, z.B. 2 Gew.-% bis 3 Gew.-%, vorliegt.

11. Wasserbasierte Beschichtung nach Anspruch 1, wobei das Oxysilan in einer Menge von 0,1 Gew.-% bis 3 Gew.-%, vorzugsweise 0,5 Gew.-% bis 2,5 Gew.-%, z.B. 1 Gew.-% bis 2 Gew.-%, vorliegt.

12. Wasserbasierte Beschichtung nach Anspruch 1, wobei sie eines oder mehrere der folgenden umfasst:
(i) ein oder mehrere färbende Mittel in einer Menge von 0,5 Gew.-% bis 50 Gew.-%;
(ii) eine Siliciumdioxid-Sol-Gel-Zusammensetzung in einer Menge von 0,1 Gew.-% bis 20 Gew.-%;
(iii) ein zusätzlicher vernetzender Bestandteil, der in einer Menge von 0,1 Gew.-% bis 15 Gew.-% vorliegt; oder
(iv) ein organisches Lösungsmittel, das in einer Menge von 0,1 Gew.-% bis 15 Gew.-%, vorzugsweise 0 Gew.-% bis 2 Gew.-%, z.B. 0 Gew.-% bis 1 Gew.-%, vorliegt.

13. Wasserbasierte Beschichtung nach Anspruch 1, wobei das wässrige selbstvernetzende System einen pH-Wert <7 hat, vorzugsweise einen pH-Wert von 1 bis 6, und/oder wobei die Viskosität des wässrigen selbstvernetzenden Systems bei einer 50 gew.-%igen wässrigen Lösung 50 bis 5.000 cP beträgt, wenn die Messung mittels eines Viskosimeters vom Typ Brookfield DV-2T mit einer LV-61-Scheibe mit 60 U/min. bei Raumtemperatur erfolgt.

14. Wasserbasierte Beschichtung nach Anspruch 1, wobei sie weiterhin einen oder mehrere Zusatzstoffe umfasst, die aus Schaumverhütern, Netzmitteln, Verlaufmitteln, Dispergiermitteln, Tensiden, Weichmachern, antimikrobiellen Mitteln, Photokatalysatoren, UV-Filtern und Antioxidantien ausgewählt sind, wobei sie vorzugsweise weiterhin einen phosphatbasierten Weichmacher umfasst.

15. Wasserbasierte Beschichtung nach Anspruch 1, wobei die Zusammensetzung nach dem Formulieren der Zusammensetzung mindestens eine Woche lang in einem fließfähigen, verwendbaren Zustand bleibt, vorzugsweise mindestens einen Monat lang nach dem Formulieren der Zusammensetzung.

16. Beschichtetes Substrat, das ein Substrat umfasst, welches mit der wasserbasierten Beschichtung nach einem beliebigen der Ansprüche 1 bis 15 beschichtet ist.

17. Beschichtetes Substrat nach Anspruch 16, wobei das Substrat aus dem Folgenden ausgewählt ist
(i) Glas, einem Metall und einem keramischen Stoff, wobei das Substrat vorzugsweise weiterhin ein anorganisches Oxid umfasst, welches aus Titandioxid, Siliciumdioxid, Eisenoxid und deren Kombinationen ausgewählt ist; oder
(ii) Glas, flachem transparentem Glas sowie Glimmerpartikeln, wobei die Beschichtung vorzugsweise mittels eines Verfahrens auf das Substrat aufgebracht wird, welches aus dem Sprühbeschichten, dem Tauchbeschichten, dem Verlaufbeschichten, dem Rotationsbeschichten, dem Vorhangbeschichten und dem Walzenbeschichten ausgewählt ist.

18. Farbiges beschichtetes Substrat, das ein Glassubstrat umfasst, welches mit der wasserbasierten Beschichtung nach Anspruch 1 beschichtet ist, wobei die wasserbasierte Beschichtung weiterhin ein färbendes Mittel umfasst, wobei die wasserbasierte Beschichtung vorzugsweise weiterhin eine Siliciumdioxid-Sol-Gel-Zusammensetzung umfasst.

19. Beschichtetes Substrat, das ein Glassubstrat umfasst, welches mit der wasserbasierten Beschichtung nach Anspruch 1 beschichtet ist, wobei die wasserbasierte Beschichtung weiterhin ein Mattglanzmittel oder ein Trübungsmittel umfasst, wobei die wasserbasierte Beschichtung vorzugsweise weiterhin eine Siliciumdioxid-Sol-Gel-Zusammensetzung umfasst.

20. Beschichtetes Substrat nach Anspruch 16 oder 19, oder farbiges beschichtetes Substrat nach Anspruch 18, wobei es sich bei dem Substrat um einen Glasbehälter handelt.

21. Beschichtetes Substrat nach Anspruch 16, wobei das beschichtete Substrat einen Bleistift-Härtegrad von ≥6H hat und/oder wobei das beschichtete Substrat eine Abriebfestigkeit von ≥4 gegenüber einer handelsüblichen Herrenduftzubereitung, Aceton und/oder einem gleichartigen Glasbehälter hat.

## Revendications

1. Revêtement à base aqueuse comprenant :
un système aqueux autoréticulant comprenant de l'eau, une résine acrylate, et au moins un constituant qui se réticule avec la résine acrylate, dans lequel ledit au moins un constituant qui se réticule avec la résine acrylate est sélectionné parmi au moins un alcool multifonctionnel, au moins un acide carboxylique multifonctionnel, et des combinaisons de ceux-ci ;
et au moins un silane promoteur d'adhérence sélectionné parmi un silane à fonctionnalité amino et un oxysilane sélectionné parmi un oxysilane mono-, di-, tri-, ou tétrafonctionnel, et des combinaisons de ceux-ci.

2. Revêtement à base aqueuse selon la revendication 1, dans lequel ledit au moins un silane promoteur d'adhérence comprend :
(i) un oxysilane à fonctionnalité amino, préférablement un oxysilane à fonctionnalité amino représenté par la formule (I)
R¹ₓ(Si(OR²)₄₋ₓ (I)
x est un nombre entier de 1, 2 ou 3 ; chaque groupe R¹ est indépendamment H, un groupe alkylamino C₁-C₁₀, un groupe alkylamino fonctionnalisé C₁-C₁₀, un groupe alkylèneamino C₁-C₁₀, un groupe arylamino C₁-C₁₀, ou un groupe alkylétheramino C₁-C₁₀, tous les groupes R¹ n'étant pas H ; chaque groupe R² est indépendamment H, un groupe alkyle C₁-C₅, un groupe acétyle C₁-C₅, ou un groupe -Si(OR³)_{3-y}R⁴_{y} dans lequel y est un nombre entier de 0, 1, 2, ou 3 ; chaque groupe R³ est indépendamment H, un groupe alkyle C₁-C₅, un groupe acétyle C₁-C₅, ou un autre groupe -Si(OR³)_{3-y}R⁴_{y} ; chaque groupe R⁴ est indépendamment H, un groupe alkyle C₁-C₁₀, un groupe alkyle fonctionnalisé C₁-C₁₀, un groupe alkylène C₁-C₁₀, un groupe aryle, un groupe alkyléther C₁-C₁₀, un groupe alkylamino C₁-C₁₀, un groupe alkylamino fonctionnalisé C₁-C₁₀, un groupe alkylèneamino C₁-C₁₀, un groupe arylamino, ou un groupe alkylétheramino C₁-C₁₀, et des combinaisons de ceux-ci, par exemple un oxysilane à fonctionnalité amino sélectionné parmi le 3-aminopropyltriméthoxysilane, le 3-aminopropyltriéthoxysilane, le 3-aminopropyldiisopropyléthoxysilane, le 3-aminopropyldiméthyléthoxysilane, le 3-aminopropylméthyldiéthoxysilane, le (p, m)-aminophényltriméthoxysilane, le 3-aminopropyltris(méthoxyéthoxyéthoxy)silane, le 3-aminopropylsilanetriol, le 3-(3-aminophénoxy)propyltriméthoxysilane, le 4-aminobutyltriéthoxysilane, le N-(6-aminohexyl)aminopropyltriméthoxysilane, le N-(6-aminohexyl)aminométhyltriéthoxysilane, le 3-(2-aminoéthylamino)propyltriméthoxysilane, l'(aminoéthylaminométhyl)phénéthyltriméthoxysilane, et des combinaisons de ceux-ci ;
(ii) un oxysilane sélectionné parmi un oxysilane mono-, di-, tri- ou tétrafonctionnel, préférablement un oxysilane mono-, di-, tri, ou tétrafonctionnel représenté par la formule (II) :
R⁵ₓSi(OR⁶)₄₋ₓ (II)
x est un nombre entier de 0, 1, 2 ou 3 ; chaque groupe R⁵ est indépendamment H, un groupe alkyle C₁-C₂₀, un groupe alkyle fonctionnalisé C₁-C₂₀, un groupe alkylène C₁-C₂₀, un groupe aryle C₁-C₂₀, ou un groupe alkyléther C₁-C₂₀ ; chaque groupe R⁶ est indépendamment H, un groupe alkyle C₁-C₂₀, un groupe alkyléther C₁-C₂₀, un groupe acétyle C₁-C₂₀, un groupe -Si(OR⁷)_{3-y}R⁸_{y} ou collectivement, le groupe OR⁶ forme un groupe carboxylate ; y est un nombre entier de 0, 1, 2 ou 3 ; chaque groupe R⁷ est indépendamment H, un groupe alkyle C₁-C₂₀, un groupe acétyle C₁-C₂₀, ou un autre groupe Si(OR⁷)_{3-y}R⁸_{y} ; chaque groupe R⁸ est indépendamment H, un groupe alkyle C₁-C₂₀, un groupe alkyle fonctionnalisé C₁-C₂₀), un groupe alkylène C₁-C₂₀, un groupe aryle, ou un groupe alkyléther C₁-C₂₀, et des combinaisons de ceux-ci, par exemple un silane mono-, di- ou trifonctionnel sélectionné parmi l'éthoxytriméthylsilane, le méthoxytriméthylsilane, le méthyltriméthoxysilane, le méthyltriéthoxysilane, le diméthyldiméthoxysilane, le diméthyldiéthoxysilane, le propyltriméthoxysilane, l'isobutyltriméthoxysilane, le n-octyltriéthoxysilane, le phényltriméthoxysilane, le phényltriéthoxysilane, l'éthyltriméthoxysilane, le diphénydiéthoxysilane, le vinyltriméthoxysilane, le vinyltriacétoxysilane, le méthacrylate de triméthoxysilylpropyle, et des combinaisons de ceux-ci ;
(iii) un oxysilane tétrafonctionnel sélectionné parmi l'orthosilicate de tétraméthyle, l'orthosilicate de tétraéthyle, l'orthosilicate de tétrapropyle, l'orthosilicate de tétraisopropyle, l'orthosilicate de tétrabutyle, l'orthosilicate de tétraisobutyle, le tétrakis(méthoxyéthoxy)silane, le tétrakis(méthoxypropoxy)silane, le tétrakis(éthoxyéthoxy)silane, le tétrakis(méthoxyéthoxyéthoxy)silane, le triméthoxyéthoxysilane, le diméthoxydiéthoxysilane, le triéthoxyméthoxysilane, le poly(diméthoxysiloxane), le poly(diéthoxysiloxane), le poly(diméthoxydiéthoxysiloxane), le tétrakis(triméthoxysiloxy)silane, le tétrakis(triéthoxysiloxy)silane, le tétraacétate de silicium, le tétrapropionate de silicium, le tétrabutyrate de silicium, et des combinaisons de ceux-ci ; ou
(iv) une combinaison d'au moins un silane à fonctionnalité amino et d'au moins un oxysilane sélectionné parmi un oxysilane mono-, di-, tri- ou tétrafonctionnel.

3. Revêtement à base aqueuse selon la revendication 1, dans lequel la résine acrylate est une résine poly(acrylate).

4. Revêtement à base aqueuse selon la revendication 1, dans lequel le système aqueux autoréticulant est un système monotope.

5. Revêtement à base aqueuse selon la revendication 1, dans lequel l'acrylate autoréticulant se réticule à une température de 50 °C à 300 °C, préférablement de 100 °C à 250 °C, par exemple de 150 °C à 200 °C.

6. Revêtement à base aqueuse selon la revendication 1, dans lequel la résine acrylate est dérivée de :
(i) un ou plusieurs monomères acrylates sélectionnés parmi des (méth)acrylates d'alkyle, d'aryle, d'alkaryle, des esters d'acide acrylique et méthacrylique avec des alcools qui contiennent au moins un autre hétéroatome supplémentaire en plus de l'atome d'oxygène dans le groupe alcool et/ou qui contiennent un cycle aliphatique ou aromatique ;
(ii) un ou plusieurs monomères acrylates sélectionnés parmi le méthacrylate de méthyle, l'acrylate de méthyle, l'acrylate de n-butyle, l'acrylate d'éthyle et l'acrylate de 2-éthylhexyle, l'acrylate de 2-éthoxyéthyle, le (méth)acrylate de 2-butoxyéthyle, le (méth)acrylate de diméthylaminoéthyle, le (méth)acrylate de diéthylaminoéthyle, le (méth)acrylate de cyclohexyle, le (méth)acrylate de phényléthyle, le (méth)acrylate de phénylpropyle, le (méth)acrylate de furfuryle, le (méth)acrylate d'hydroxyéthyle, le méthacrylate de poly(éthylène glycol), et le méthacrylate de N,N-diméthylaminoéthyle ; ou
(iii) un monomère acrylate et un ou plusieurs monomères comportant une ou plusieurs doubles liaisons oléfiniques polymérisables par polymérisation radicalaire, préférablement un monomère acrylate et un ou plusieurs monomères comportant une ou plusieurs doubles liaisons oléfiniques polymérisables par polymérisation radicalaire sélectionnés parmi des esters vinyliques, des composés vinylaromatiques, des nitriles, des halogénures de vinyle, et des hydrocarbures.

7. Revêtement à base aqueuse selon la revendication 1, comprenant en outre :
(i) une composition de sol-gel de silice, par exemple une composition de sol-gel de silice catalysée par un acide ayant une teneur en solides de > 1 % en poids à 50 % en poids, préférablement de 10 % en poids à 50 % en poids, plus préférablement de 20 % en poids à 40 % en poids ; ou
(ii) au moins une matière colorante, préférablement au moins une matière colorante sélectionnée parmi un pigment ou un colorant, par exemple au moins un colorant sélectionné parmi des colorants azoïques, des colorants anthraquinones, des colorants xanthéniques, des colorants aziniques, et des combinaisons de ceux-ci, ou au moins un pigment organique sélectionné parmi des pigments jaunes portant les numéros 12, 13, 14, 17, 74, 83, 114, 126, 127, 174, 188 ; des pigments rouges portant les numéros 2, 22, 23, 48:1, 48:2, 52, 52:1, 53, 57:1, 112, 122, 166, 170, 184, 202, 266, 269 ; des pigments orange portant les numéros 5, 16, 34, 36 ; des pigments bleus portant les numéros 15, 15:3, 15:4 ; des pigments violets portant les numéros 3, 23, 27 ; et le pigment vert numéro 7, ou au moins un pigment inorganique sélectionné parmi des oxydes de fer, des dioxydes de titane, des oxydes de chrome, des ferrocyanures d'ammonium ferrique, des noirs d'oxyde ferrique, le pigment noir numéro 7, le pigment blanc numéro 6 et le pigment blanc numéro 7.

8. Revêtement à base aqueuse selon la revendication 1, dans lequel le système aqueux autoréticulant comprend en outre un constituant de réticulation supplémentaire sélectionné parmi un carbodiimide, une aziridine, un époxyde, un uréthane protégé, une mélamine, et des combinaisons de ceux-ci.

9. Revêtement à base aqueuse selon la revendication 1, dans lequel le système aqueux autoréticulant est présent dans une quantité de 5 % en poids à 90 % en poids, préférablement de 10 % en poids à 80 % en poids, plus préférablement de 15 % en poids à 60 % en poids, par exemple de 20 % en poids à 50 % en poids.

10. Revêtement à base aqueuse selon la revendication 1, dans lequel le silane à fonctionnalité amino est présent dans une quantité de 0,5 % en poids à 5 % en poids, préférablement de 1,0 % en poids à 4 % en poids, par exemple de 2 % en poids à 3 % en poids.

11. Revêtement à base aqueuse selon la revendication 1, dans lequel l'oxysilane est présent dans une quantité de 0,1 % en poids à 3 % en poids, préférablement de 0,5 % en poids à 2,5 % en poids, par exemple de 1 % en poids à 2 % en poids.

12. Revêtement à base aqueuse selon la revendication 1, comprenant en outre un ou plusieurs de :
(i) un ou plusieurs colorants présents dans une quantité de 0,5 % en poids à 50 % en poids ;
(ii) une composition de sol-gel de silice présente dans une quantité de 0,1 % en poids à 20 % en poids ;
(iii) un constituant de réticulation additionnel présent dans une quantité de 0, 1 % en poids à 15 % en poids ; ou
(iv) un solvant organique présent dans une quantité de 0,1 % en poids à 15 % en poids, préférablement de 0 % en poids à 2 % en poids, par exemple de 0 % en poids à 1 % en poids.

13. Revêtement à base aqueuse selon la revendication 1, dans lequel le système aqueux autoréticulant a un pH < 7, préférablement un pH de 1 à 6, et/ou dans lequel la viscosité du système aqueux autoréticulant en solution aqueuse à 50 % en poids est de 50 à 5 000 cP, mesurée par un viscosimètre Brookfield DV-2T équipé d'une broche de type LV-61 tournant à 60 trs/min, et à la température ambiante.

14. Revêtement à base aqueuse selon la revendication 1, comprenant en outre un ou plusieurs additifs sélectionnés parmi des antimousse, des agents mouillants, des agents d'étalement, des dispersants, des tensioactifs, des plastifiants, des agents antimicrobiens, des photocatalyseurs, des absorbeurs d'ultraviolets et des antioxydants, comprenant préférablement en outre un plastifiant à base de phosphate.

15. Revêtement à base aqueuse selon la revendication 1, dans lequel la composition reste dans un état fluide et utilisable pendant au moins une semaine après la formulation de la composition, préférablement pendant au moins un mois après la formulation de la composition.

16. Substrat revêtu comprenant un substrat recouvert du revêtement à base aqueuse selon l'une quelconque des revendications 1 à 15.

17. Substrat revêtu selon la revendication 16, le substrat étant sélectionné parmi :
(i) un verre, un métal et une céramique, le substrat comprenant préférablement en outre un oxyde inorganique sélectionné parmi l'oxyde de titane, la silice, l'oxyde de fer, et des combinaisons de ceux-ci ; ou
(ii) un verre, un verre feuilleté transparent, et des particules de mica, le revêtement étant préférablement appliqué sur le substrat par un procédé de revêtement sélectionné parmi un revêtement par pulvérisation, un revêtement par immersion, un revêtement par ruissellement, un revêtement par centrifugation, un revêtement en rideau et un revêtement au rouleau.

18. Substrat revêtu coloré comprenant un substrat en verre recouvert du revêtement à base aqueuse selon la revendication 1, dans lequel le revêtement à base aqueuse comprend en outre un colorant, préférablement dans lequel le revêtement à base aqueuse comprend en outre une composition de sol-gel de silice.

19. Substrat revêtu comprenant un substrat en verre recouvert du revêtement à base aqueuse selon la revendication 1, dans lequel le revêtement à base aqueuse comprend en outre un agent matifiant ou un agent d'opacification, préférablement dans lequel le revêtement à base aqueuse comprend en outre une composition de sol-gel de silice.

20. Substrat revêtu selon la revendication 16 ou 19, ou substrat revêtu coloré selon la revendication 18, le substrat étant un récipient en verre.

21. Substrat revêtu selon la revendication 16, le substrat revêtu ayant une dureté au crayon de > 6H, et/ou le substrat revêtu ayant une résistance au frottement de > 4 avec un ou plusieurs d'une eau de Cologne, de l'acétone, et d'un flacon.
